# EUROPÄISCHE PATENTSCHRIFT

(11) **EP 3 189 382 B1**
(45) Veröffentlichungstag und Bekanntmachung des Hinweises auf die Patenterteilung: **14.07.2021**
(21) Anmeldenummer: 14771525.4
(22) Anmeldetag: 04.09.2014
(51) Int. Cl.: G05B 15/02, H04L 12/28, G05B 19/042

(54) **VERFAHREN ZUR DATENERHEBUNG FÜR DIE KONFIGURATION EINES GEBÄUDEAUTOMATIONSSYSTEMS UND VERFAHREN ZUM KONFIGURIEREN EINES GEBÄUDEAUTOMATIONSSYSTEMS**
METHOD FOR DATA COLLECTION FOR THE CONFIGURATION OF A BUILDING AUTOMATION SYSTEM AND METHOD FOR CONFIGURING A BUILDING AUTOMATION SYSTEM
PROCÉDÉ DE COLLECTE DE DONNÉES POUR CONFIGURER UN SYSTÈME D'AUTOMATISATION DE BÂTIMENT ET PROCÉDÉ DE CONFIGURATION D'UN SYSTÈME D'AUTOMATISATION DE BÂTIMENT

(43) Veröffentlichungstag der Anmeldung: 12.07.2017
(73) Patentinhaber: Aizo Group AG, 8952 Schlieren (CH)
(72) Erfinder: VESPER, Martin, 42399 Wuppertal (DE)
(74) Vertreter: Hepp Wenger Ryffel AG
(86) Internationale Anmeldenummer: PCT/EP2014/068847
(87) Internationale Veröffentlichungsnummer: WO 2016/034236

(56) Entgegenhaltungen:
- FR-A1- 2 966 625
- US-B1- 8 490 006
- digitalSTROM AG: "digitalSTROM Installationshandbuch", Internet, 28. Februar 2014 (2014-02-28), XP002738874, Gefunden im Internet: URL:http://www.digitalstrom.com/documents/ handbuecher/Installationshandbuch_A1121D00 2V011_DE_28-02-2014_Final.pdf [gefunden am 2015-04-22]
- digitalSTROM AG: "digitalSTROM Planerhandbuch", Internet, 28. Februar 2014 (2014-02-28), XP002738875, Gefunden im Internet: URL:http://www.digitalstrom.com/documents/ handbuecher/Planerhandbuch_A1121D003V004_D E_28-02-2014_Final.pdf [gefunden am 2015-04-22]
- digitalSTROM AG: "digitalSTROM. So funktioniert's. Die nachrüstbare, zukunftsweisende Vernetzungstechnologie", Internet, 1. September 2014 (2014-09-01), XP002738876, Gefunden im Internet: URL:http://www.digitalstrom.com/out/media/ document/2014_9_digitalSTROM_Sonderdruck_D E_Version_Schweiz.pdf [gefunden am 2015-04-22]
- KNAUTH S ET AL: "SARBAU Towards Highly Self-Configuring IP-Fieldbus Based Building Automation Networks", 22ND INTERNATIONAL CONFERENCE ON ADVANCED INFORMATION NETWORKING AND APPLICATIONS - WORKSHOPS, 2008 : AINA 2008, IEEE, PISCATAWAY, NJ, USA, 25. März 2008 (2008-03-25), Seiten 713-717, XP002718655, DOI: 10.1109/AINA.2008.53 ISBN: 978-0-7695-3096-3
- None

## Beschreibung

Die vorliegende Erfindung betrifft ein Verfahren zur Datenerhebung für die Konfiguration eines Gebäudeautomationssystems sowie ein Verfahren zum Konfigurieren eines Gebäudeautomationssystems.

Aus dem Stand der Technik sind verschiedene Gebäudeautomationssysteme bekannt. Solche Systeme werden insbesondere eingesetzt, um eine Gebäude- oder Hausinstallation intelligent zu steuern. Beispielsweise kann somit erreicht werden, dass beim Einschalten des Fernsehgeräts automatisch der Raum verdunkelt, die Jalousie geschlossen und eine Hintergrundbeleuchtung eingeschaltet wird. Ebenso ist es denkbar, dass mit solchen Gebäudeautomationssystemen abhängig von Signalen von Sensoren beispielsweise die Raumtemperatur erhöht, die Sonnenstoren geschlossen oder das Dachfenster geschlossen wird. Ebenso sind heute verschiedene intelligente Gebäudeautomationssysteme auf dem Markt, welche das Schalten bzw. Einstellen von so genannten Szenen ermöglicht. So ist es beispielsweise denkbar, dass auf Knopfdruck in einem Wohnzimmer eine romantische Lichtstimmung "candlelight dinner" oder durch einen weiteren Knopfdruck die Beleuchtung wieder auf volle Leistung eingestellt wird, so dass ein einfaches Arbeiten am Wohnzimmertisch möglich ist. Im Stand der Technik enthalten ist das Gebäudeautomationssystem digitalSTROM der Firma digitalSTROM AG aus dem Jahre 2014, welches in einem "Benutzerhandbuch", 2014, und einem "Planerhandbuch", 2014, beschrieben ist.

Alle diese Gebäudeautomationssysteme haben gemeinsam, dass neben der eigentlichen Installation der für die Steuerung benötigten Geräte und Taster oder Fernsteuerungen auch aufwendig Raumeinheiten und Szenen definiert werden müssen. Solche Raumeinheiten bzw. Szenen definieren nun eine Gruppe von Verbrauchern mit ihren jeweiligen Schaltzuständen. Dabei wird unter einem Schaltzustand nicht nur ein blosses "Eingeschaltet" bzw. "Ausgeschaltet" verstanden, sondern beispielsweise bei einer Stereoanlage auch die entsprechende Lautstärke oder bei einer Lichtquelle die entsprechende Dimmung oder Lichtleistung. Dieses Definieren der Raumeinheiten bzw. der Szenen ist für den einfachen Anwender relativ komplex, immer jedoch zeitintensiv. Durch die vielen Möglichkeiten, welche handelsübliche Gebäudeautomationssysteme heute bieten, ist die Übersicht nur schwer zu behalten.

Es ist eine Aufgabe der Erfindung, die Nachteile des Standes der Technik zu überwinden, insbesondere soll ein Verfahren zur Datenerhebung für die Konfiguration eines Gebäudeautomationssystems zur Verfügung gestellt werden, welches einfach durchzuführen ist. Diese Aufgabe wird durch das im unabhängigen Anspruch 1 definierte Verfahren gelöst. Weitere Ausführungsformen ergeben sich aus den abhängigen Patentansprüchen.

Dabei umfasst ein Gebäudeautomationssystem die folgenden Komponenten:
- ein Netzwerk, insbesondere ein Gebäudestromnetz, mit wenigstens einem Verbraucher und wenigstens einem Signalgeber zum Bewirken von Zustandsänderungen des Verbrauches,
- Steuerungsmittel zum Verbinden der Verbraucher mit dem Netzwerk,
- Steuerungsmittel zum Verbinden der Signalgeber mit dem Netzwerk.

Unter einem Netzwerk wird jegliche Einrichtung verstanden, welche geeignet ist, Daten oder Signale von einer ersten Komponente zu einer zweiten Komponente im Netzwerk zu übertragen. Beispielsweise kann ein herkömmliches drahtgebundes Datennetzwerk, z.B. basierend auf Ethernet Verbindungen oder aber auch ein Netzwerk auf Funk Basis, insbesondere WLAN, als Netzwerk im vorliegenden Sinne verstanden werden.

Das erfindungsgemässe Gebäudeautomationssystem basiert auf einem Netzwerk, welches vorzugsweise bereits im entsprechenden Gebäude vorhanden ist oder aber mit den einzelnen Komponenten installiert wird. Neben dem oben genannten Datennetz kann das Gebäudeautomationssystem auch auf dem Gebäudestromnetz oder einer Kombination aus einem Datennetz und einem Gebäudestromnetz basieren.

Unter einem Gebäudestromnetz wird hier und im Folgenden eine elektrische Vernetzung verstanden, welche insbesondere die elektrische Energieversorgung der verschiedenen in einem Gebäude verwendeten Verbraucher sicherstellt. Nicht ausgeschlossen wird dabei, dass neben Verbrauchern auch Energieerzeuger im Gebäudestromnetz vorhanden sind, beispielsweise alternativen Energiequellen, wie beispielsweise Solar, Wind, Zwischenspeichern etc. Das Gebäudestromnetzes ist kann mit dem öffentlichen Stromnetz, welches üblicherweise von einem lokalen oder regionalen Stromprovider in Form einer Wechselspannung zur Verfügung gestellt wird verbunden sein. Ebenso ist jedoch auch eine autonome Anlage mit alternativen Energiequellen denkbar.

Im Falle eines Gebäudestromnetzes wird im Verteiler die Netzspannung auf einzelne Lastkreise verteilt, welche üblicherweise einem Raum oder mehreren Räumen zugeordnet sind. Jeder Lastkreis ist üblicherweise über eine Sicherung abgesichert, so dass eine Störung in einem einzelnen Lastkreis nicht die Energieversorgung im gesamten Appartement oder Gebäude beeinträchtigt. In einem solchen Lastkreis ist wenigstens ein Verbraucher angeordnet oder zumindest vorgesehen. Ausserdem sind in einem solchen Lastkreis Signalgeber in Form von Tastern oder Schaltern vorgesehen, welche den Zustand eines zugeordneten Verbrauchers steuern können.

Im Falle eines Gebäudestromnetzes können in den Lastkreisen Lastkontroller vorhanden sein, welche Informationen aus dem zugeordneten Lastkreis, beispielsweise von einem Verbraucher oder von einem Steuerungsmittel aufnimmt und einem weiteren Verbraucher, einem Steuerungsmittel oder gar einem Lastkontroller eines benachbarten Lastkreises übermittelt. Hierzu sind die Lastkontroller untereinander verbunden, beispielsweise über ein Bussystem. Ausserdem kann ein Lastkontroller auch Informationen, welche vom Verbraucher oder einem Steuerungsmittel zur Verfügung gestellt werden, einem weiteren System zur Analyse weiterleiten.

Ein Steuerungsmittel ist ein Element, welches sowohl einen angeschlossenen Verbraucher steuert, bzw. dem angeschlossenen Verbraucher eine bestimmte Information übergibt. Im Falle eines Gebäudestromnetzes kann das Steuerungsmittel dem Verbraucher eine bestimmte Spannung aus dem Lastkreis zur Verfügung stellen. Ebenfalls denkbar ist, dass das Steuerungsmittel Informationen von einem angeschlossenen Verbraucher und/oder einem angeschlossenen Signalgeber oder Taster in das Netzwerk, insbesondere in den Lastkreis, einspeisen kann. Entsprechend kann ein Steuerungsmittel auch Informationen an einen Verbraucher übermitteln.

Ein erfindungsgemässes Verfahren zur Datenerhebung für die Konfiguration eines Gebäudeautomationssystems umfasst die Schritte:
a. Identifizieren eines ersten Steuerungsmittels des Gebäudeautomationssystems und übermitteln der Identifikationsdaten an einen externen Datenspeicher,
b. Bereitstellen von Informationen zum unter Schritt a. identifizierten Steuerungsmittel im externen Datenspeicher, wobei die Informationen wenigstens eine Bezeichnung des Raumes in dem das Steuerungsmittel installiert werden soll und insbesondere einen Namen des Steuerungsmittels umfassen,
c. physikalisches Installieren des Steuerungsmittels im Netzwerk im unter Schritt b. bezeichneten Raum,
d. Wiederholen der Schritte a. bis c. mit allen im Gebäudeautomationssystem zu integrierenden Steuerungsmitteln,
e. Einschalten der Netzwerkes,
f. Verbinden des Gebäudeautomationssystems mit dem externen Datenspeicher,
g. Zusammentragen von über die Netzwerkverbindungen zwischen den einzelnen Komponenten ermittelten oder ermittelbaren Informationen sowie der Informationen aus dem externen Datenspeicher.

Zur Identifikation ist das Steuerungsmittel mit einem eineindeutigen Code versehen, beispielweise in Form eines eindimensionalen oder zweidimensionalen Barcodes. Ein solcher eineindeutiger Code kann dem Steuerungsmittel bereits bei der Produktion zugeordnet werden. Ein Installateur kann nun beispielsweise diesen Code mit einem entsprechenden Gerät einlesen und dem externen Datenspeicher übermitteln.

Sobald das Steuerungsmittel identifiziert ist, können zusätzliche Informationen zum Steuerungsmittel im externen Datenspeicher bereitgestellt werden. Diese Daten können bereits im externen Speicher vorhanden sein oder an den externen Datenspeicher übermittelt werden. Beispielsweise können Angaben zum Raum, indem das Steuerungsmittel installiert wird, Angaben zu einem an das Steuerungsmittel angeschlossenen oder anzuschliessenden Verbraucher, etc. vom Installateur bereitgestellt und übermittelt werden.

Selbstverständlich können auch andere Geräte oder Komponenten identifiziert, Daten zu diesen Geräten oder Komponenten im externen Datenspeicher zur Verfügung gestellt und im Netzwerk installiert werden. So ist es beispielsweise bei einem Netzwerk, welches auf dem Gebäudestromnetz aufbaut, denkbar, dass die Lastkreise mit einem Lastkontroller versehen werden. Einem Lastkontroller können beispielsweise Informationen zu der verwendeten Sicherung seines Lastkreises bereitgestellt werden. Ebenso können zum Gebäudeautomationssystem oder zu den einzelnen Komponenten Informationen über später zur Verfügung stehende Applikationen bereitgestellt werden.

Es ist selbstverständlich auch denkbar, dass die Schritte a. und b. für mehrere Steuerungsmittel eines Raumes durchgeführt werden und diese erst anschliessend physikalisch installiert werden. So kann beispielsweise ein Installateur die für einen bestimmten Raum vorgesehenen Komponenten auf einem Arbeitstisch bereitlegen und der Reihe nach identifizieren und die entsprechenden Informationen bereitstellten. Die Installation muss dann jedoch entsprechend den identifizierten und bereitgestellten Informationen erfolgen. Ein solches Vorgehen ist insbesondere dann effizient, wenn bereits der Elektroplaner die Informationen im externen Datenspeicher bereitgestellt hat und der Installateur mit der Identifizierung des Steuerungsmittels lediglich noch das Steuerungsmittel den entsprechenden vorabgespeicherten Daten zuordnet. Dieses Vorgehen lässt sich auch für ein gesamtes Appartement oder Gebäude mit mehreren Räumen durchführen.

Nachdem die Installation der einzelnen Komponenten des Gebäudeautomationssystems erfolgt ist, schaltet der Installateur das Netzwerk ein. Dabei wird unter Einschalten des Netzwerkes verstanden, dass das Netzwerk aufgebaut wird, so dass eine Datenübertragung möglich wird. Im Falle eines Gebäudestromnetzes, welches als Netzwerk dient, wird unter Einschalten ein Verbinden mit der Netzspannung des Netzbetreibers verstanden. Üblicherweise wird hierzu ein Hauptschalter betätigt oder eine Hauptsicherung eingeschaltet. Es wird eine Verbindung mit dem externen Datenspeicher erstellt, so dass die vorab dem externen Datenspeicher übermittelten Daten vom Gebäudeautomationssystem abgerufen werden können. Dabei kann die Verbindung mit dem externen Datenspeicher durch den Installateur erstellt oder automatisch vom Gebäudeautomationssystem selbst über einen entsprechenden Netzwerkadapter erstellt werden. Eine solche Verbindung mit dem externen Datenspeicher kann über das Internet erfolgen. Es versteht sich von selbst, dass hierzu eine entsprechend gesicherte Verbindung aufgebaut werden kann. Eine Verbindung ist nicht nur mit dem externen Datenspeicher möglich sondern kann auch zwischen dem Gebäudeautomationssystem und externen Geräten, beispielsweise mit einem Computer oder einem mobilen Gerät hergestellt werden.

Neben den Daten aus dem externen Speicher werden auch Informationen über die Netzwerkverbindungen zwischen den einzelnen Komponenten ermittelt. Solche Informationen werden nachfolgend "Verbindungs"-Informationen genannt. So wird beispielsweise erkannt, welches Steuerungsmittel an welchem Lastkreis angeschlossen und dadurch mit welchem Lastkontroller verbunden ist. Ebenso wird ermittelt, welche Steuerungsmittel untereinander verbunden sind.

Auch der Netzwerkadapter kann identifiziert werden und korrespondierende Daten im externen Datenspeicher abgelegt werden.

Ein weiterer Aspekt der vorliegenden Erfindung betrifft ein Verfahren zum Konfigurieren eines Gebäudeautomationssystems. Dabei umfasst das Gebäudeautomationssystem dieselben Komponenten wie bereits vorgängig zur Datenerhebung beschrieben. Das Verfahren umfasst die folgenden Schritte:
- Erheben der Daten aus einer Kombination der über die Netzwerkverbindungen zwischen den einzelnen Komponenten ermittelten oder ermittelbaren Informationen mit den Informationen aus dem externen Datenspeicher, insbesondere wie vorgängig geschildert,
- Auswerten der Informationen gemäss einem vorbestimmten oder vorbestimmbaren Algorithmus, wobei das Auswerten insbesondere automatisch erfolgt,
- Abspeichern der ausgewerteten Informationen im Gebäudeautomationssystem.

Ein solcher Algorithmus kann bereits in den Komponenten des Gebäudeautomationssystems integriert oder aber im externen Datenspeicher abgelegt und von dort ausgeführt werden oder gar in einem zusätzliches Gerät vorhanden sein. Der Algorithmus bestimmt dann, welche Informationen miteinander kombiniert werden und welche Konfigurationen im Gebäudeautomationssystem eingestellt werden. Der Algorithmus kann dabei manuell, also beispielsweise vom Installateur gestartet werden oder aber selbständig starten.

Der Algorithmus kann vorgegebene Konfigurationsregeln und insbesondere auch Informationen aus früher installierten Gebäudeautomationssystemen, wie beispielsweise Standardbezeichnungen oder Standardverhalten, Daten aus statistischen Auswertungen, Daten aus allgemeinem Verständnis berücksichtigen. Das Gebäudeautomationssystem wird somit zunehmend einfacher zu konfigurieren, da Erfahrungswerte bereits bestehender Systeme mit berücksichtigt werden können. Ausserdem können Produktionsdaten der einzelnen Komponenten zur Verfügung gestellt werden, welche beispielsweise im Falle einer Störung hilfreiche Hinweise zur Störungsbehebung geben können. Unter allgemeinem Verständnis wird dabei verstanden, dass beispielsweise ein als Lichttaster bezeichneter Schalter nicht für die Steuerung eines Brandmelders benutzt werden kann oder die Geschwindigkeit eines Rollladenmotors abgesehen von den Ein-/Ausschaltvorgängen nicht regulierbar ist.

Basierend auf der Raumbezeichnung der einzelnen Steuerungsmittel und der Verbindung zwischen den Steuerungsmitteln untereinander kann die entsprechende Anzahl der Räume der Gebäudeautomatisation ermittelt werden. Ausserdem kann bei einem Gebäudeautomationssystem, welches auf dem Gebäudestromnetz basiert aus den Verbindungen zwischen Steuerungsmitteln und Lastkontroller eine Zuordnung der Lastkontroller zu den entsprechenden Räumen und insbesondere der einzelnen Räume zu den entsprechenden Lastkreisen erfolgen. Diese Zuordnung bzw. diese Anzahl Räume mit den entsprechenden Bezeichnungen können im Gebäudeautomationssystem gespeichert werden und/oder an den externen Speicher übermittelt werden. Durch diese Kombination der "Verbindungs"-Informationen mit den Daten aus dem externen Datenspeicher können beispielsweise vordefinierte Schaltszenen bereits konfiguriert werden, ohne dass der Installateur weitere Informationen oder Verknüpfungen definiert. Beispielsweise wird so erkannt, welche Verbraucher sich in einem Raum befinden so dass eine voreingestellte Szene "Raum aus" ohne weitere Einstellungen durch den Installateur oder den Benutzer beispielsweise das Licht im entsprechenden Raum löscht. Weiter können auch historische Daten aus früher installierten Gebäudeautomationssystemen berücksichtigt werden um beispielsweise eine Schaltszene oder eine für den Anwender sinnvolle Benennung zu definieren. Insbesondere kann verglichen werden, welche Komponenten bereits zu einem früheren Zeitpunkt mit welchen Informationen angereichert wurden. Beispielsweise wird ein "Panik"-Taster, welcher vom Installateur als "Paniktaster" bezeichnet wurde, direkt mit der Funktion "alle Leuchten ein" verbunden werden, da diese Konfiguration bereits aus anderen Gebäudeautomationssystemen bekannt ist. Ebenso ist es beispielsweise denkbar, dass eine Aussenleuchte der Eingangstüre direkt mit einer Ausschaltverzögerung von z.B. 2 Minuten versehen wird. Selbstverständlich ist es möglich, solche automatische Informationen oder Grundinformationen benutzerdefiniert zu ändern und anders zu konfigurieren.

Selbstverständlich können bestimmte Komponenten bereits anhand ihrer Identifikationsdaten eindeutig mit der entsprechenden Funktion verknüpft werden. So kann beispielsweise ein "Paniktaster" bereits eine eindeutige Ausgestaltung aufweisen, welche ihn von einem anderen Taster unterscheidet. Die Bezeichnung "Paniktaster" muss vom Installateur nicht mehr vorgenommen werden, der Taster muss lediglich identifiziert und installiert werden.

Der Algorithmus kann beispielsweise alle Raumbezeichnungen im Gebäudeautomationssystem auslesen und die entsprechende Anzahl Räume definieren und bezeichnen. Dabei können Basisinformationen, welche beispielsweise durch die Anzahl verwendeter Lastkontroller bereits gegeben sind, überschrieben werden. Ebenso können Standardraumbezeichnungen, welche in einem üblichen Gebäude oder Appartement verwendet werden, benutzt oder überschrieben werden. Die einzelnen Steuerungsmittel werden dann den bezeichneten Räumen zugeordnet. Auch wird das Steuerungsmittel entsprechend dem vom Installateur bestimmten Namen oder des bereits vorab im externen Datenspeicher hinterlegten Namen benannt, so dass dieses später bei einer Konfigurationsanpassung einfach identifiziert werden kann. Ebenso können auch die einzelnen Lastkontroller benannt werden, wobei sich der Name der Lastkontroller beispielsweise aus denjenigen Raumbezeichnungen zusammensetzt, welche dem entsprechenden Lastkreis bzw. den im Lastkreis vorhandenen Steuerungsmitteln entspricht.

Ausserdem können weitere Konfigurationen vorgenommen werden. So kann beispielsweise von jeder Komponente, insbesondere von jedem Steuerungsmittel der Hardwaretyp abgerufen werden. In einer Datenbank können beispielsweise für jeden Hardwaretyp Standardkonfigurationen hinterlegt sein. Falls für die Komponente vom Installateur oder vorab im externen Datenspeicher keine Konfigurationsdaten hinterlegt wurden, kann diese Standardkonfiguration übernommen werden. Sind jedoch Daten im externen Datenspeicher vorhanden, so werden diese entsprechend übernommen. Dabei kann jedoch eine Plausibilitätsprüfung stattfinden, um mögliche Fehlfunktionen von vornherein auszuschliessen. Je nach Information, welche zur Verfügung steht, sind unterschiedliche Aktionen nötig. So kann beispielsweise die Information über die maximale Leistung oder die Fassung einer Leuchte abgerufen werden. Ebenso ist es auch denkbar, dass bei einer dimmbaren Leuchte Informationen über das spezifische Leuchtmittel abgerufen und beispielsweise die Dimmkurve basierend auf der EAN/GTIN-Nummer gesetzt wird.

Jedes Steuerungsmittel kann individuell und eineindeutig identifizierbar sein. Die Identifikation kann beispielsweise anhand der EAN/GTIN-Nummer in Kombination mit einer Seriennummer SGTIN und/oder anhand eines entsprechenden Barcodes erfolgen. Je kompletter die Identifikation der vorhandenen Steuerungsmittel ist, desto vollständiger kann eine insbesondere automatische Konfiguration des Gebäudeautomationssystems erfolgen. Ebenso können auch andere Geräte und Komponenten, welche im Netzwerk installiert werden, individuell und eindeutig identifizierbar sein.

Das Steuerungsmittel, insbesondere jedes Steuerungsmittel kann im externen Datenspeicher ein virtuelles Abbild aufweisen. Ebenso kann jedes weitere Gerät oder jede weitere Komponente im Gebäudeautomationssystem ein virtuelles Abbild besitzen. Entsprechend können die vom Installateur übermittelten Daten einem Datenstamm des entsprechenden Steuerungsmittels, Geräts oder Komponente zugeordnet werden. Dieses virtuelle Abbild kann die Informationen zum entsprechenden Steuerungsmittel, Gerät oder Komponente aufweisen und bei Bedarf für die weitere Verwendung zur Verfügung stellen. Ausserdem kann das virtuelle Abbild bereits bei der Produktion des Steuerungsmittels, Geräts oder Komponente mit ausgewählten Grundinformationen versehen werden. Dies erleichtert wiederum die Arbeit des Installateurs, so dass dieser bei der Installation weniger Daten eingeben muss. Mögliche Grundinformationen umfassen:
- Produktbezeichnung
- Version der Hardware
- Version der Software
- Produktionsdatum
- Testergebnisse
- vordefinierte Bezeichnungen
- Verweis auf ergänzende Dokumentation, wie Anschlussschema, Bilder, Link auf Herstellerseite
- usw.

Die Informationen zu den Steuerungsmitteln, Geräten oder Komponenten können neben den eindeutigen Identifikationsdaten auch Angaben ausgewählt aus der nachfolgenden Gruppe umfassen:
- Bezeichnung des Raumes, in welchem das Steuerungsmittel installiert ist,
- Position des Steuerungsmittels,
- spezielle Funktionen des Steuerungsmittels,
- Informationen zur Art des angeschlossenen oder anzuschliessenden Verbrauchers, wie beispielsweise dimmbar oder schaltbar,
- maximal zulässige Leistung des angeschlossenen oder anzuschliessenden Verbrauchers,
- maximal zur Verfügung stehende Leistung, welche einem angeschlossenen Verbraucher zur Verfügung gestellt werden kann oder von diesem Verbraucht werden kann,
- Steuerungsinformationen zu einzelnen Szenen,
- Farbe oder Mode des Steuerungsmittels,
- Informationen zum Installateur, wie beispielsweise Anschrift und Name,
- Installationsdatum,
- usw.
Es sind Informationen zu den einzelnen Steuerungsmitteln, Geräten oder Komponenten selbst, zu den angeschlossenen Geräten oder bezüglich der Installation denkbar.

Unter einem Mode des Steuerungsmittels kann beispielsweise eine Zuordnung zu dessen Anwendungsbereich verstanden werden, wobei jedem Anwendungsbereich eine entsprechende Farbe zur einfacheren Identifikation zugeordnet werden kann. So ist beispielsweise eine Unterteilung in folgende Anwendungsbereiche mit den entsprechenden Farben möglich:
- Licht - gelb,
- Schatten - grau,
- Klima - blau,
- Audio - cyan,
- Video - magenta,
- Sicherheit - rot,
- Zugang - grün,
- Joker - schwarz, wobei der Joker frei konfigurierbar ist.
Selbstverständlich sind auch andere Anwendungsbereiche und andere Farbzuordnungen denkbar.

Die Steuerungsmittel können untereinander oder mit den Lastkontrollern, insbesondere über die Stromleitung kommunizieren. Ebenso sind jedoch auch andere Kommunikationspfade, wie beispielsweise Funk oder optische Kommunikationsleitungen denkbar. Entsprechend sind die Steuerungsmittel untereinander oder mit den Lastkontrollern, insbesondere über die Stromleitung verbunden. Diese direkte Verbindung gewährleistet wiederum eine Grundinformation, wie vorgängig als "Verbindungs"-Information beschrieben. Ausserdem ist es auch denkbar, dass die Steuerungsmittel untereinander kommunizieren können.

Im Falle eines Gebäudeautomationssystems basierend auf dem Gebäudestromnetz mit entsprechenden Lastkontrollern, können die Lastkontroller untereinander kommunizieren und sind insbesondere untereinander über eine insbesondere drahtgebunden Leitung verbunden. Auch hier sind wiederum andere Kommunikationspfade denkbar. Somit wird ermöglicht, dass von einem Steuerungsmittel, welches beispielsweise mit einem Taster als Signalgeber verbunden ist, auch ein Verbraucher in einem anderen Lastkreis gesteuert werden kann. Ausserdem werden so allgemeine Szenen, wie beispielsweise "Panik" ermöglicht, welche beispielsweise alle oder ausgewählte Lampen im gesamten Gebäudeautomationssystem schalten. Selbstverständlich ist es auch in anderen Netzwerken möglich, raumübergreifende Aktionen vorzunehmen.

Nach erfolgter Konfiguration kann das Gebäudeautomationssystem einzelne Verbraucher, insbesondere jede Leuchte individuell ansteuern, um die Funktion des Gebäudeautomationssystems zu überprüfen. Gleichzeitig wird durch das visuelle Einschalten der einzelnen Leuchten dem Installateur die Möglichkeit geboten, die Überprüfung zu verfolgen und gegebenenfalls Fehler zu erkennen und zu beheben. Ausserdem kann das Gebäudeautomationssystem einzelne Verbraucher auch individuell ansteuern und deren Verbrauch ausmessen, um beispielsweise den Ansteuermechanismus zu bestimmen. Insbesondere bei Leuchten kann so bestimmt werden, ob diese mit einem Phasenanschnitt oder einem Phasenabschnitt oder gar nicht dimmbar sind.

Das Gebäudeautomationssystem kann nach erfolgter Konfiguration einen Plausibilitätscheck durchführen, um die einzelnen Zuordnungen von Steuerungsmittel zu Raum oder Lastkontroller bzw. von Steuerungsmittel zu Verbraucher zu überprüfen. Beispielsweise kann so erkannt werden, wenn ein Steuerungsmittel, welches einer Leuchte zugeordnet wurde, fälschlicherweise mit einer Heizung verbunden wurde.

Die Informationen zu den Steuerungsmitteln können vom Installateur bei der Installation der Steuerungsmittel bereitgestellt und dem Datenspeicher übermittelt werden. Ebenso ist es aber auch denkbar, dass die Informationen zu den einzelnen Steuerungsmittel bereits vor der physikalischen Installation im externen Datenspeicher bereitgestellt werden und der Installateur lediglich das Steuerungsmittel dem entsprechenden virtuellen Abbild zuordnet. Ein solches Vorgehen ist beispielsweise denkbar, wenn eine grössere Überbauung mit identischen Appartements erstellt wird und bereits der Elektroplaner die entsprechenden Daten bereitstellt.

Die Identifikation des Steuerungsmittels und das Bereitstellen der Informationen können vom Installateur mittels eines mobilen Datenerfassungsgeräts, insbesondere mittels eines Mobiltelefons erfolgen. Hierzu kann das Mobiltelefon beispielsweise über eine spezifische App verfügen, welche das Erfassen der Daten erlaubt und den Kontakt mit dem externen Datenspeicher herstellt. Beispielsweise ist es denkbar, dass der Installateur die Informationen über Spracheingabe erfasst und das System diese gesprochene Information analysiert und entsprechend für die weitere Verarbeitung aufbereitet. So kann beispielsweise ein gesprochener Satz: "Dies ist eine Deckenleuchte im Wohnzimmer. Sie ist dimmbar und hat ein Halogen-Leuchtmittel mit einer maximalen Leistung von 80 Watt." analysiert und in die nachfolgende Information über den Verbraucher identifiziert werden:
- Leuchte,
- Decke,
- Wohnzimmer,
- dimmbar,
- Halogen-Leuchtmittel
- 80 Watt.
Es ist auch denkbar, dass andere Systeme zum Einsatz kommen, wie beispielsweise ein intelligentes Brillensystem mit Head-up-Display, insbesondere Google Glass oder ähnlich Produkte, welche die Identifikation der zu installierenden Komponente und gleichzeitig die Eingabe weiterer Daten ermöglicht.

Aus den zusammengetragenen Daten kann ein Konfigurationsbericht erstellt und entsprechend dem Konfigurationsbericht die einzelnen Komponenten oder Applikationen des Gebäudeautomationssystems konfiguriert werden. Dieser Konfigurationsbericht kann beispielsweise im Gebäudeautomationssystem insbesondere dezentral abgespeichert werden. Ebenfalls ist es denkbar, dass der Konfigurationsbericht insbesondere zusätzlich im externen Datenspeicher hinterlegt wird. Insbesondere dann, wenn die Konfiguration automatisch erfolgt, ist ein Konfigurationsbericht hilfreich. Ein solcher Konfigurationsbericht ist insbesondere auch dann von Vorteilen, wenn die Grundkonfiguration abgeändert und benutzerspezifisch eingestellt oder modifiziert werden soll. Auch bei einer späteren Wiederherstellung der Konfiguration kann ein abgespeicherter Konfigurationsbericht hilfreich sein.

Das Steuerungsmittel kann in einer elektrischen Anschlussklemme integriert sein. Eine solche Anschlussklemme kann beispielsweise eine Form ähnlich einer Lüsterklemme aufweisen. Eine Integration in eine Anschlussklemme erlaubt eine sehr einfache Installation des Steuerungsmittels, da Anschlussklemmen insbesondere in Gebäudestromnetzen üblich sind und der Installateur nicht zusätzlich ausgebildet werden muss. Ausserdem ist es denkbar, dass das Steuerungsmittel bereits in einem Verbraucher integriert ist, so dass sich eine zusätzliche Installation erübrigt. Denkbar ist beispielsweise eine intelligente Anschlussklemme, welche in einer Lampenfassung oder in einer Rollladensteuerung integriert ist.

Zur weiteren Konfiguration bzw. zur Modifikation der Grundkonfiguration oder einer bereits eingestellten Konfiguration kann eine Datenverbindung zu einer Konfigurationseinheit aufgebaut werden. Dabei wird unter einer solchen Konfigurationseinheit beispielsweise ein mobiles Telefon, ein Smartphone, ein Tablet oder ein Notebook verstanden. Eine solche Datenverbindung basiert dann üblicherweise auf einer drahtlosen Verbindung. Ebenso ist es jedoch auch denkbar, dass die Konfigurationseinheit auf einem PC installiert ist, so dass vorzugsweise eine drahtgebundene Datenverbindung erstellt wird. Anhand einer solchen Konfigurationseinheit kann der Benutzer das Konfigurationsprotokoll einsehen und/oder auch Konfigurationen des Gebäudeautomationssystems benutzerspezifisch modifizieren.

Die Datenverbindung zur Konfigurationseinheit kann, wie bereits zum externen Datenspeicher erläutert, über das Internet erfolgen. Entsprechend wird die gesamte Gebäudeautomatisation bzw. die Steuerung der Verbraucher eines Gebäudes ortsunabhängig abrufbar und/oder überwachbar und/oder konfigurierbar. Es versteht sich von selbst, dass eine solche Datenübertragung sinnvollerweise durch geeignete Sicherheitsstandards, wie Verschlüsselungen, gesichert wird.

Anhand von Figuren, wird die Erfindung im Folgenden näher erläutert. Es zeigen:
- Figur 1:: eine schematische Darstellung eines Gebäudestromnetzes,
- Figur 2:: einen Grundriss eines Appartements, wobei die einzelnen Räume und Lastkreise dargestellt sind,
- Figur 3:: eine schematische Darstellung eines Gebäudeautomationssystems.

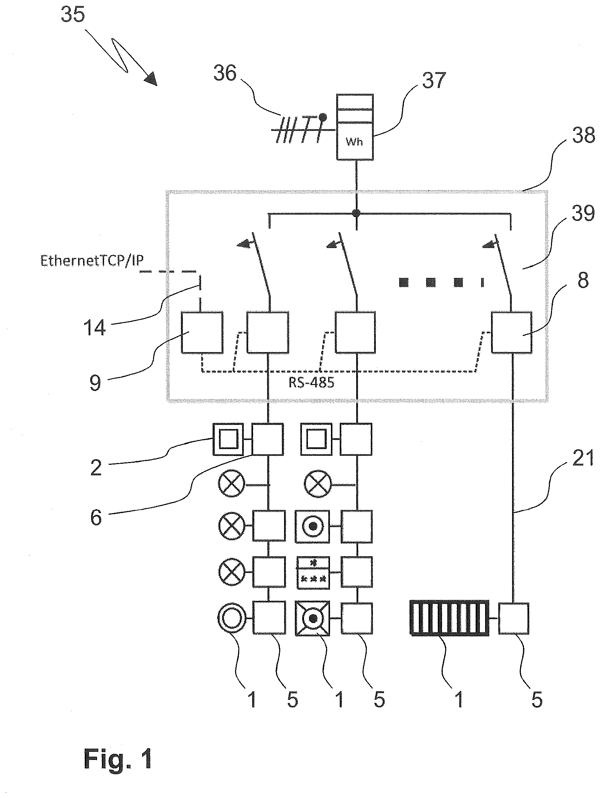

In Figur 1 ist eine schematische Darstellung eines Gebäudestromnetzes 35 gezeigt, welches im Sinne der vorliegenden Erfindung als Netzwerk dient. Über einem Netzzugang 36, welcher üblicherweise von einem lokalen oder regionalen Stromprovider zur Verfügung gestellt wird, erfolgt die Energieversorgung des Gebäudes oder des Appartements über einen Stromzähler 37 zu einem Verteiler 38. In diesem Verteiler 38 wird die Netzspannung auf die einzelnen Lastkreise 21 verteilt, wobei jeder Lastkreis 21 über eine eigene Sicherung 39 verfügt, welche in einem Schadensfall eine Trennung des Lastkreises 21 vom Netzzugang 36 ermöglicht. Des Weiteren ist jeder Lastkreis 21 mit einem Lastkontroller 8 versehen, welche untereinander über einen RS-485-Bus verbunden sind. Ebenfalls über diesen RS-485-Bus verbunden ist ein Netzwerkadapter 9, welcher eine Internetverbindung 14 ermöglicht.

Diese Internetverbindung 14 ist als EthernetTCP/IP dargestellt. Der Netzwerkadapter 9 kann neben der Verbindung mit dem Internet auch eine Verbindung mit einem Gebäudeinternen LAN-Netzwerk ermöglichen, an dem auch weitere Geräte angeschlossen sein können. Somit werden auch Geräte konfigurierbar, welche nicht am gezeigten Gebäudestromnetz 35 angeschlossen sind.
An den Lastkreisen 21 sind über die herkömmlichen Stromleitungen Verbraucher 1 über Steuerungsmittel 5 angeschlossen. Diese Steuerungsmitteln 5 sind in Form von Anschlussklemmen ausgeführt, welche jedoch zusätzliche Funktionen für die Gebäudeautomatisation erlauben. So kommunizieren diese Steuerungsmittel über die Stromleitung mit den Lastkontrollern und steuern beispielsweise die Leistung, welche dem Verbraucher zur Verfügung gestellt wird. Beispielsweise kann ein Steuerungsmittel eine angeschlossene Leuchte ein- und ausschalten und/oder dimmen. Ebenfalls über Steuerungsmittel 6 angeschlossen an die Lastkreise 21 sind Signalgeber in Form von Tastern 2, welche dem Steuerungsmittel 6 einen Schaltimpuls übergeben um einzelne und/oder ausgewählte Verbraucher 1 über deren Schaltmittel 5 im Lastkreis 21 oder lastkreisübergreifend anzusteuern. Beispielsweise kann eine einzelne Tasterbetätigung einen dem Taster 2 zugeordneten Verbraucher 1 ein- oder ausschalten. Eine doppelte Tasterbetätigung kann sich beispielsweise auf alle Verbraucher im entsprechenden Raum auswirken, je nachdem welche Konfiguration einer doppelten Tasterbetätigung hinterlegt wurde, bzw. welche Szene dieser doppelten Tasterbetätigung entspricht. Selbstverständlich kann das Gebäudeautomationssystem auch ohne die dargestellten Lastkontroller funktionieren, wenn beispielsweise die Verbindung zwischen den einzelnen Steuerungsmitteln 5, 6 über ein alternatives Netzwerk, insbesondere ein WLAN-Netzwerk gewährleistet wird.

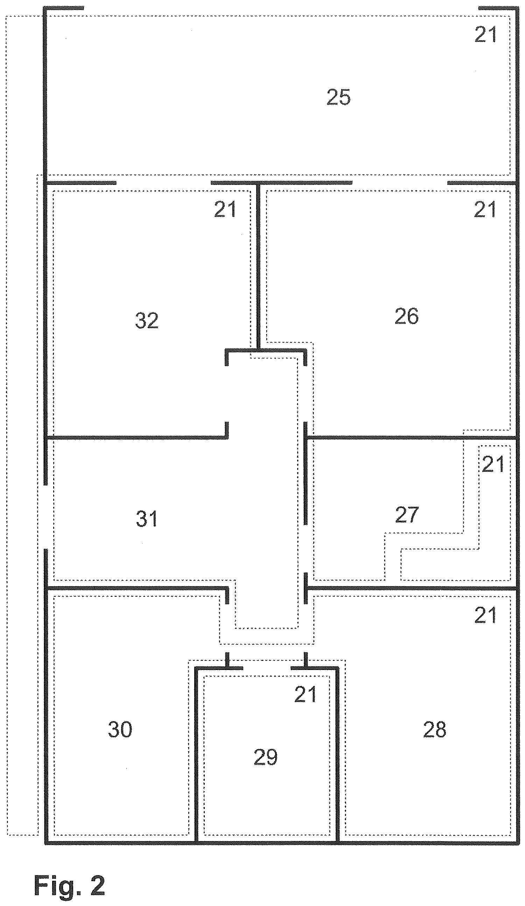

Figur 2 zeigt einen Grundriss eines Appartements, wobei die einzelnen Räume und Lastkreise 21 dargestellt sind. So sind beispielweise einem ersten Lastkreis das gesamte Wohnzimmer 26 und die Beleuchtung sowie die Steckdosen der Küche 27 zugeordnet, während die Küchengeräte über einen separaten Lastkreis verfügen. Ein weiterer Lastkreis umfasst die beiden Schlafzimmer 28, 30, das Bad 29 weist wieder einen separaten Lastkreis auf. Der Flur 31 und der Salon 32 sind wiederum einem gemeinsamen Lastkreis zugeordnet. Der Lastkreis der Terrasse 25 erstreckt sich über die Frontseite des Appartements und umfasst auch einen Verbraucher welcher beispielsweise vor der Eingangstüre angeordnet ist.

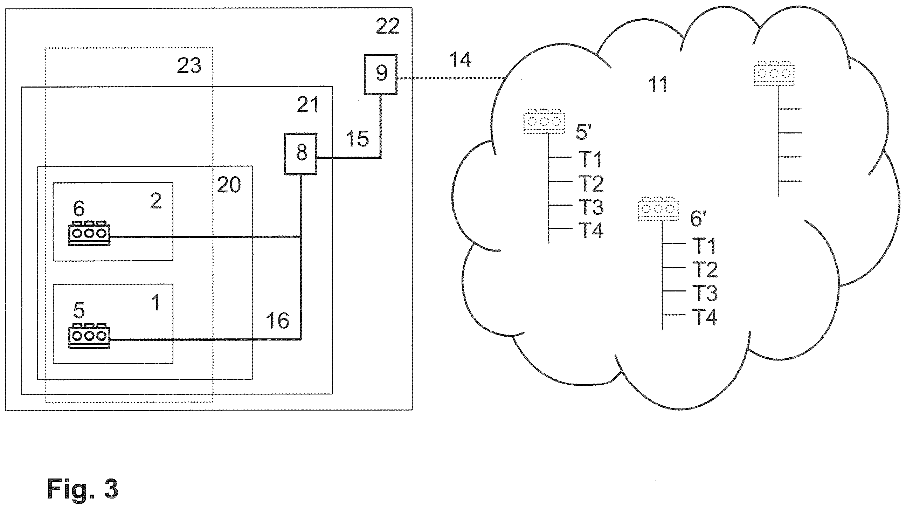

In der Figur 3 ist eine schematische Darstellung eines Gebäudeautomationssystems gezeigt. Als kleinste Einheit ist ein Verbraucher 1 mit einem Steuerungsmittel 5 in Form einer Anschlussklemme gezeigt. Dieser Verbraucher 1 befindet sich in einem Raum 20 zusammen mit einem Signalgeber in Form eines Tasters 2, welcher über eine Steuerungsmittel 6 in Form einer Tasterklemme an die Datenleitung 16 angeschlossen ist. Die Datenleitung sowohl bei der Tasterklemme als auch bei der Anschlussklemme des Verbrauchers 5 ist direkt die Stromleitung. Diese Stromleitung oder Datenleitung 16 ist mit einem Lastkontroller 8 des Lastkreises 21 verbunden, welche den Schaltimpuls des Tasters 2 falls nötig an einen benachbarten Lastkreis (siehe Figur 1) übermittelt. Für die Steuerung des Verbrauchers 1 wird der Schaltimpuls direkt vom Taster 2 über die Tasterklemme und die Stromleitung 16 an die Anschlussklemme 5 übermittelt. Wie vorgängig beschrieben können vom Taster 2 auch sogenannte Szenen 23 aufgerufen werden, welche im Gebäudeautomationssystem definiert sind. Eine solche Szene 23 kann sich nicht nur auf Verbraucher aus demselben Lastkreis beziehen, sondern auch Verbraucher aus anderen Lastkreisen betreffen. Der entsprechend Schaltimpuls wird somit über die Tasterklemme und die Datenleitung 16 an den Lastkontroller 8 des ersten Lastkrieses 21 übermittelt. Da der Lastkontroller 8 wie vorgängig zu Figur 1 erläutert, mit den Lastkontrollern der benachbarten Lastkreise verbunden ist, kann der Schaltimpuls auch an die weiteren Verbraucher bzw. deren Steuerungsmittel oder Anschlussklemmen übertragen werden. Bei einer Verbindung der einzelnen Steuerungsmittel 5, 6 über ein alternatives Netzwerk, beispielsweise ein Funk-Netzwerk, sind die Lastkontroller nicht zwingen nötig und es kann auf sie verzichtet werden. Ein Schaltimpuls wird dann von einem ersten Steuerungsmittel über das alternative Netzwerk dem Steuerungsmittel oder der Anschlussklemme des zu schaltenden Verbrauchers übermittelt.

Bei der Installation und erstmaligen Konfiguration wird ein Netzwerkadapter 9 über eine Datenleitung 15 mit den Lastkontrollern 8 verbunden. Dabei genügt es, wenn ein einzelner Lastkontroller 8 mit dem Netzwerkadapter 9 verbunden wird, das die Lastkontroller ebenfalls untereinander verbunden sind und gegenseitig Daten austauschen können. Der Netzwerkadapter 9 wird eine Verbindung, insbesondere eine Internetverbindung 14 mit einem externen Speicher 11, dargestellt als Wolke, aufbauen. In diesem externen Speicher 11 ist von jeden Steuerungsmittel 5, 6 ein virtuelles Abbild 5', 6' vorhanden, welches eine Vielzahl von Daten T1, T2, T3, T4 beinhaltet. Das virtuelle Abbild 5', 6' wurde bereits bei der Produktion des Steuerungsmittels 5, 6 erzeugt und bei der Installation mit weiteren Daten vervollständigt. So hat der Installateur beispielsweise das Steuerungsmittel 6 als Tasterklemme identifiziert und diesem Informationen zum Raum und der Position im Raum, beispielsweise "Schlafzimmer 1" und "Wand Ost neben der Zimmertüre" zugeordnet. Das Steuerungsmittel 5 hat der Installateur als Anschlussklemme identifiziert und ebenfalls einen Raum und eine Position im Raum, beispielsweise "Schlafzimmer 1" und "Deckenleuchte" zugeordnet. Bei einem Gebäudeautomationssystem mit einem vom Gebäudestromnetz unabhängigen Netzwerk wird der Netzwerkadapter in das Netzwerk integriert und kommuniziert dann über die entsprechenden Netzwerkverbindungen mit den einzelnen Steuerungsmitteln.

Bei einer ersten Konfiguration wird das Gebäudeautomationssystem die Informationen aus dem virtuellen Abbild 5' ,6' kombinieren mit den Informationen welche aus den Verbindungen im entsprechenden Netzwerk verfügbar sind. Entsprechend weiss das Gebäudeautomationssystem dass sich beide Steuerungsmittel 5 und 6 im selben Raum 20, nämlich im "Schlafzimmer 1" befinden. Ausserdem kann bestimmt werden, in welchem Lastkreis 21 sich die beiden Verbraucher Steuerungsmittel 5 und 6 befinden. Grundeinstellungen, wie beispielsweise Ein- oder Ausschalten der angeschlossenen Verbraucher bei doppelter Tasterbetätigung eines beliebigen Tasters, können ebenfalls bereits konfiguriert werden.

## Patentansprüche

1. Verfahren zur Datenerhebung für die Konfiguration eines Gebäudeautomationssystems, wobei das Gebäudeautomationssystem die folgenden Komponenten umfasst:
- ein Netzwerk, insbesondere ein Gebäudestromnetz (35) mit wenigstens einem Verbraucher (1) und wenigstens einem Signalgeber (2) zum Bewirken von Zustandsänderungen des Verbrauchers (1),
- Steuerungsmittel (5, 6) zum Verbinden der Verbraucher (1) mit dem Netzwerk,
- Steuerungsmittel (5, 6) zum Verbinden der Signalgeber (2) mit dem Netzwerk,
umfassend in einem ersten Schritt das Bereitstellen von Informationen zu allen im Gebäudeautomationssystem zu integrierenden Steuerungsmitteln (5, 6) in einem externen Datenspeicher (11), wobei die Informationen wenigstens eine Bezeichnung des Raumes in dem das Steuerungsmittel installiert werden soll und einen Namen des Steuerungsmittels umfasst, und
in einem weiteren Schritt für alle im Gebäudeautomationssystem zu integrierenden Steuerungsmittel (5, 6):
- Identifizieren eines Steuerungsmittels (5, 6) und übermitteln der Identifikationsdaten an den externen Datenspeicher (11),
- physikalisches Installieren des Steuerungsmittels (5, 6) im Netzwerk im entsprechend bezeichneten Raum,
weiter umfassend die Schritte:
a) Einschalten des Netzwerkes,
b) Verbinden des Gebäudeautomationssystems mit dem externen Datenspeicher (11),
c) Zusammentragen von Verbindungsinformationen sowie der Informationen aus dem externen Datenspeicher (11),
wobei die Verbindungsinformationen über die Netzwerkverbindungen zwischen den einzelnen Komponenten ermittelte oder ermittelbare Informationen sind, und
wobei die Verbindungsinformationen die Information umfasst, welche Steuerungsmittel (5, 6) untereinander verbunden sind.

2. Verfahren nach Anspruch 1, **dadurch gekennzeichnet, dass** das Zusammentragen der Informationen automatisch bei Bestehen einer Verbindung mit dem externen Datenspeicher (11) erfolgt.

3. Verfahren zum Konfigurieren eines Gebäudeautomationssystems, umfassend:
- einen Schritt der Datenerhebung aus einer Kombination von Verbindungsinformationen mit Informationen aus einem externen Datenspeicher, gemäss einem der Ansprüche 1 oder 2,
- einen Schritt des Auswertens der Informationen gemäss einem vorbestimmten oder vorbestimmbaren Algorithmus, wobei das Auswerten insbesondere automatisch erfolgt, sowie
- einen Schritt des Abspeicherns der ausgewerteten Informationen im Gebäudeautomationssystem
wobei die Verbindungsinformationen über die Netzwerkverbindungen zwischen den einzelnen Komponenten ermittelte oder ermittelbare Informationen sind, und
wobei die Verbindungsinformationen die Information umfasst, welche Steuerungsmittel (5, 6) untereinander verbunden sind.

4. Verfahren nach Anspruch 3, **dadurch gekennzeichnet, dass** der Algorithmus vorgegebene Konfigurationsregeln und insbesondere auch Informationen aus früher installierten Gebäudeautomationssystemen, wie beispielsweise Standardbezeichnungen oder Standardverhalten, Daten aus statistischen Auswertungen, allgemeines Verständnis berücksichtigt.

5. Verfahren nach einem der Ansprüche 1 bis 4, **dadurch gekennzeichnet, dass** jedes Steuerungsmittel (5, 6) individuell identifizierbar ist.

6. Verfahren nach einem der Ansprüche 1 bis 5, **dadurch gekennzeichnet, dass** das Steuerungsmittel (5, 6), insbesondere jedes Steuerungsmittel, im externen Datenspeicher (11) ein virtuelles Abbild (5', 6') aufweist.

7. Verfahren nach Anspruch 6, **dadurch gekennzeichnet, dass** das virtuelle Abbild (5', 6') die Informationen zum entsprechenden Steuerungsmittel (5, 6) aufweist.

8. Verfahren nach Anspruch 7, **dadurch gekennzeichnet, dass** ausgewählte Grundinformationen des Steuerungsmittels (5, 6) bereits im virtuellen Abbild (5', 6') bei der Produktion des Steuerungsmittels (5, 6) hinterlegt werden.

9. Verfahren nach einem der Ansprüche 1 bis 8, **dadurch gekennzeichnet, dass** die Informationen zu den Steuerungsmitteln (5, 6) neben der eindeutigen Identifikation auch Angaben ausgewählt aus der nachfolgenden Gruppe umfassen:
- Position des Steuerungsmittels (5, 6),
- spezielle Funktionen,
- Informationen zur Art des angeschlossenen oder anzuschliessenden Verbrauchers (1),
- maximal zulässige Leistung des angeschlossenen oder anzuschliessenden Verbrauchers (1)
- maximal zur Verfügung stehende Leistung,
- Steuerungsinformationen der einzelnen Szenen,
- Farbe oder Mode des Steuerungsmittels
- Informationen zum Installateur,
- Installationsdatum.

10. Verfahren nach einem der Ansprüche 1 bis 9, **dadurch gekennzeichnet, dass** die Steuerungsmittel (5, 6) untereinander insbesondere drahtgebunden, vorzugsweise über eine Stromleitung (16) kommunizieren.

11. Verfahren nach einem der Ansprüche 3 bis 10, **dadurch gekennzeichnet, dass** das Gebäudeautomationssystem nach erfolgter Konfiguration einzelne Verbraucher (1), insbesondere jede einzelne Leuchte, individuell ansteuert und/oder ausmisst, um die Funktion des Gebäudeautomationssystems zu überprüfen und/oder den Ansteuermechanismus des Verbrauchers zu bestimmen.

12. Verfahren nach einem der Ansprüche 3 bis 11, **dadurch gekennzeichnet, dass** das Gebäudeautomationssystem nach erfolgter Konfiguration einen Plausibilitätscheck durchführt, um die einzelnen Zuordnungen von Steuerungsmittel (5, 6) zu den Verbrauchern (1) zu überprüfen.

13. Verfahren nach einem der Ansprüche 1 bis 12, **dadurch gekennzeichnet, dass** die Informationen zu den Steuerungsmitteln (5, 6) bereits vor der Installation im Datenspeicher (11) bereitstehen und der Installateur lediglich das Steuerungsmittel (5, 6) dem entsprechenden virtuellen Abbild (5', 6') zuordnet.

14. Verfahren nach einem der Ansprüche 1 bis 13, **dadurch gekennzeichnet, dass** ein Konfigurationsbericht erstellt wird und insbesondere der Konfigurationsbericht dezentral im Gebäudeautomationssystem gespeichert wird.

## Claims

1. Method for data collection for the configuration of a building automation system, wherein the building automation system comprises the following components:
- a network, in particular a building electrical power network (35) with at least one electrical load (1) and at least one signal transducer (2) to effectuate changes in the state of the electrical load (1),
- control means (5, 6) for connecting the electrical loads (1) to the network,
- control means (5, 6) for connecting the signal transducers (2) to the network,
comprising, in a first step, providing information about all control means (5, 6) to be integrated in the building automation system in an external data memory (11), wherein the information comprises at least a designation of the room in which the control means is to be installed, and a name of the control means, and in a further step, for all control means (5, 6) to be integrated in the building automation system (5, 6):
- identifying a control means (5, 6) and transmitting the identification data to the external data memory (11),
- physically installing the control means (5, 6) in the network in the accordingly designated room,
further comprising the steps:
a) switching on the network,
b) connecting the building automation system to the external data memory (11),
c) bringing together connection information and the information from the external data memory (11), wherein the connection information is information that is or can be determined by means of the network connections between the individual components, and
wherein the connection information comprises the information about which control means (5, 6) are connected to one another.

2. Method according to Claim 1, **characterized in that** the bringing together of the information occurs automatically when a connection to the external data memory (11) exists.

3. Method for configuring a building automation system, comprising:
- a step of data collection from a combination of connection information and information from an external data memory, according to either of Claims 1 and 2,
- a step of evaluating the information according to a predetermined or predeterminable algorithm, wherein the evaluation is, in particular, performed automatically, and
- a step of storing the evaluated information in the building automation system,
wherein the connection information is information that is or can be determined by means of the network connections between the individual components, and wherein the connection information comprises the information about which control means (5, 6) are connected to one another.

4. Method according to Claim 3, **characterized in that** the algorithm takes into account specified configuration rules and, in particular, also information from previously installed building automation systems, such as for example standard designations or standard behaviour, data from statistical evaluations, or general understanding.

5. Method according to one of Claims 1 to 4, **characterized in that** each control means (5, 6) is individually identifiable.

6. Method according to one of Claims 1 to 5, **characterized in that** the control means (5, 6), in particular each control means, has a virtual image (5', 6') in the external data memory (11).

7. Method according to Claim 6, **characterized in that** the virtual image (5', 6') comprises the information regarding the corresponding control means (5, 6).

8. Method according to Claim 7, **characterized in that** selected basic information of the control means (5, 6) is already stored in the virtual image (5', 6') during the production of the control means (5, 6).

9. Method according to one of Claims 1 to 8, **characterized in that** the information regarding the control means (5, 6) also comprises, in addition to the unique identification, information selected from the following group:
- the position of the control means (5, 6),
- special functions,
- information regarding the type of the electrical load (1) that is connected or to be connected,
- the maximum permitted power of the electrical load (1) that is connected or to be connected,
- the maximum available power,
- control information of the individual scenes,
- the colour or mode of the control means,
- information regarding the installer,
- installation date.

10. Method according to one of Claims 1 to 9, **characterized in that** the control means (5, 6) communicate with one another, in particular over wires, preferably over an electrical power cable (16).

11. Method according to one of Claims 3 to 10, **characterized in that** after completion of the configuration the building automation system individually operates and/or measures individual electrical loads (1), in particular each individual lamp, in order to check the function of the building automation system and/or to determine the operation mechanism of the electrical load.

12. Method according to one of Claims 3 to 11, **characterized in that** after completion of the configuration the building automation system carries out a plausibility check in order to check the individual assignments of control means (5, 6) to the electrical loads (1).

13. Method according to one of Claims 1 to 12, **characterized in that** the information regarding the control means (5, 6) is already available in the data memory (11) before the installation, and the installer only assigns the control means (5, 6) to the corresponding virtual image (5', 6').

14. Method according to one of Claims 1 to 13, **characterized in that** a configuration report is prepared, and in particular the configuration report is stored non-centrally in the building automation system.

## Revendications

1. Procédé de collecte de données pour configurer un système d'automatisation de bâtiment, dans lequel le système d'automatisation de bâtiment comprend les composants suivants :
- un réseau, notamment un réseau électrique de bâtiment (35) comportant au moins un consommateur (1) et au moins un générateur de signaux (2) pour provoquer des changements d'état du consommateur (1),
- des moyens de commande (5, 6) pour connecter le consommateur (1) au réseau,
- des moyens de commande (5, 6) pour connecter les générateurs de signaux (2) au réseau,
comprenant, lors d'une première étape, la fourniture d'informations concernant tous les moyens de commande (5, 6) à intégrer dans le système d'automatisation de bâtiment, dans une mémoire de données externe (11), dans lequel les informations comprennent au moins une désignation de la pièce dans laquelle le moyen de commande doit être installé et un nom du moyen de commande et,
lors d'une autre étape, pour tous les moyens de commande (5, 6) à intégrer dans le système d'automatisation de bâtiment :
- l'identification d'un moyen de commande (5, 6) et la transmission des données d'identification à la mémoire de données externe (11),
- l'installation physique du moyen de commande (5, 6) dans le réseau dans la pièce désignée correspondante, comprenant en outre les étapes suivantes :
a) la mise en marche du réseau,
b) la connexion du système d'automatisation de bâtiment à la mémoire de données externe (11),
c) la collecte d'informations de connexion ainsi que des informations provenant de la mémoire de données externe (11),
dans lequel les informations de connexion sont des informations déterminées ou pouvant être déterminées concernant les connexions réseau entre les composants individuels, et
dans lequel les informations de connexion comprennent des informations concernant les moyens de commande (5, 6) qui sont connectés les uns aux autres.

2. Procédé selon la revendication 1, **caractérisé en ce que** la collecte des informations est effectuée automatiquement lors de l'existence d'une connexion à la mémoire de données externe (11).

3. Procédé de configuration d'un système d'automatisation de bâtiment, comprenant :
- une étape de collecte de données à partir d'une combinaison d'informations de connexion avec des informations provenant d'une mémoire de données externe, selon l'une quelconque des revendications 1 ou 2,
- une étape d'évaluation des informations selon un algorithme prédéterminé ou pouvant être prédéterminé, dans lequel l'évaluation est effectuée notamment de manière automatique, et
- une étape de stockage des informations évaluées dans le système d'automatisation de bâtiment,
dans lequel les informations de connexion sont des informations déterminées ou pouvant être déterminées par l'intermédiaire des connexions réseau entre les composants individuels, et
dans lequel les informations de connexion comprennent l'information indiquant quels moyens de commande (5, 6) sont connectés les uns aux autres.

4. Procédé selon la revendication 3, **caractérisé en ce que** l'algorithme tient compte de règles de configuration prédéterminées et notamment également d'informations provenant de systèmes d'automatisation de bâtiment installés précédemment, comme par exemple des désignations standard ou un comportement standard, des données provenant d'évaluations statistiques, une compréhension générale.

5. Procédé selon l'une quelconque des revendications 1 à 4, **caractérisé en ce que** chaque moyen de commande (5, 6) est identifiable individuellement.

6. Procédé selon l'une quelconque des revendications 1 à 5, **caractérisé en ce que** le moyen de commande (5, 6), notamment chaque moyen de commande, possède une image virtuelle (5', 6') dans la mémoire de données externe (11).

7. Procédé selon la revendication 6, **caractérisé en ce que** l'image virtuelle (5', 6') comporte les informations concernant le moyens de commande (5, 6) correspondant.

8. Procédé selon la revendication 7, **caractérisé en ce que** des informations de base sélectionnées du moyen de commande (5, 6) sont déjà stockées dans l'image virtuelle (5', 6') pendant la production du moyen de commande (5, 6).

9. Procédé selon l'une quelconque des revendications 1 à 8, **caractérisé en ce que** les informations concernant les moyens de commande (5, 6) comprennent, outre l'identification unique, des informations choisies dans le groupe suivant :
- la position du moyen de commande (5, 6),
- des fonctions spéciales,
- des informations concernant le type de consommateur (1) raccordé ou à raccorder,
- la puissance maximale admissible du consommateur raccordé ou à raccorder (1),
- la puissance maximale disponible,
- des informations de commande des différentes scènes,
- la couleur ou le mode du dispositif de commande,
- des informations concernant l'installateur,
- la date d'installation.

10. Procédé selon l'une quelconque des revendications 1 à 9, **caractérisé en ce que** les moyens de commande (5, 6) communiquent les uns avec les autres, notamment par fil, de préférence par l'intermédiaire d'une ligne électrique (16).

11. Procédé selon l'une quelconque des revendications 3 à 10, **caractérisé en ce que** le système d'automatisation de bâtiment, après que la configuration a eu lieu, commande et/ou mesure individuellement des consommateurs individuels (1), notamment chaque lampe individuelle, afin de vérifier le fonctionnement du système d'automatisation de bâtiment et/ou de déterminer le mécanisme de commande du consommateur.

12. Procédé selon l'une quelconque des revendications 3 à 11, **caractérisé en ce que** le système d'automatisation de bâtiment effectue un contrôle de plausibilité après la réalisation de la configuration afin de vérifier les affectations individuelles des moyens de commande (5, 6) aux consommateurs (1).

13. Procédé selon l'une quelconque des revendications 1 à 12, **caractérisé en ce que** les informations concernant les moyens de commande (5, 6) sont déjà disponibles dans la mémoire de données (11) avant l'installation et **en ce que** l'installateur affecte simplement les moyens de commande (5, 6) à l'image virtuelle (5', 6') correspondante.

14. Procédé selon l'une quelconque des revendications 1 à 13, **caractérisé en ce qu'**un rapport de configuration est généré, et notamment **en ce que** le rapport de configuration est stocké de manière décentralisée dans le système d'automatisation de bâtiment.
